# EUROPEAN PATENT APPLICATION

(11) **EP 3 275 563 A1**
(43) Date of publication of application: **31.01.2018**
(21) Application number: 16181830.7
(22) Date of filing: 29.07.2016
(51) Int. Cl.: B08B 9/00, A21C 11/16

(54) **METHOD FOR CLEANING DIE PLATES FOR THE PRODUCTION OF PASTA OR SNACKS AND MACHINE FOR ITS EXECUTION**

(71) Applicant: Niccolai Trafile S.r.l., 51100 Pistoia (IT)
(72) Inventor: NICCOLAI, Marcello, 51100 Pistoia (IT); NICCOLAI, Marco, 51100 PISTOIA (IT)
(74) Representative: Modiano, Micaela Nadia

(57) **Abstract**

A method for cleaning die plates for the production of pasta or snacks and a machine for its execution, the method comprising the following steps:
- a first step, in which a working fluid is placed in contact with one of the two end faces of the die plate (5) to be cleaned;
- a second step, in which the pressure of the working fluid is increased so as to force the working fluid to penetrate the holes (8) of the die plate (5) in order to push the residue of the mixture (9), present in the holes (8), so that it exits from the opposite end face of the die (5).

## Description

The present invention relates to a method for cleaning die plates for the production of pasta or snacks and to a machine for its execution.

Machines are known for carrying out the cleaning of die plates for the production of pasta or snacks. Substantially, all pasta factories or makers of snacks have at least one of these machines which they use to clean die plates before returning them to storage or reusing them for a new production cycle.

These machines, which in the sector are known as "die plate washers", consist substantially of a closed volume provided with special supports that are adapted to support the die plate during the step of washing. Removal of the residue of mixture present inside the holes of the die plates at the end of the production cycle is done by way of the mechanical action of water jets generated by an adapted pump that supplies a series of three or more nozzles. According to requirements, these machines are provided with systems that perform the movement of the die plate, or of the nozzles dispensing the jets of water under pressure, or both, so that the jets can affect the entire drawing area when performing the washing thereof.

In less advanced contexts, in order to execute the washing of the die plates, ordinary high-pressure washers, with a wand, are also used. In this case, the movement of the nozzle to affect the entire drawing area, in order to achieve a satisfactory wash, is given over exclusively to the ability of the operator.

Cleaning die plates by means of the die plate washing machines currently on the market, like cleaning using high-pressure washers with a wand, entails the use of huge volumes of water which produce a sticky discharge that, by its nature, is difficult to dispose of. This sticky discharge is the cause of unpleasant odors in the rooms used to wash the die plates.

Furthermore, the cleaning process causes the projection of fractions of this sticky discharge onto parts of the machine and of the equipment located nearby; such fractions of discharge, if not quickly removed, can cause the rapid deterioration of the machine and of the spattered equipment.

The aim of the present invention is to solve the above mentioned problems, by devising a method and a machine that make it possible to reduce the quantity of sticky discharge deriving from the cleaning of die plates, thus reducing the problems associated with its disposal.

Within this aim, an object of the invention is to provide a method and a machine that are capable of appreciably reducing the source of unpleasant odors and of dirt so as to obtain a substantial improvement of the environmental conditions in the places used to wash die plates.

Another object of the invention is to provide a method and a machine that ensure a high efficacy of cleaning die plates even in die plates with work holes that are difficult to reach completely with jets of water under pressure.

A further object of the invention is to provide a machine for cleaning die plates that is structurally simple, ensures a high reliability of operation, and can be produced at low cost.

This aim and these and other objects which will become better apparent hereinafter are achieved by a method for cleaning die plates for the production of pasta or snacks, which is characterized in that it comprises the following steps:
- a first step, in which a working fluid is placed in contact with one of two end faces of a die plate to be cleaned;
- a second step, in which the pressure of said working fluid is increased so as to force said working fluid to penetrate the holes of the die plate in order to push the residue of the mixture, present in said holes, so that it exits from the opposite end face of the die.

For the execution of the method according to the invention, preferably a machine for cleaning die plates for the production of pasta or snacks is used, which is characterized in that it comprises:
- a jacket that internally defines a chamber;
- an opening which is defined in one of the walls of said chamber and can be coupled to a die plate to be cleaned which can be arranged so that one of its end faces is connected to the inside of said chamber;
- means for introducing a working fluid into said chamber;
- means adapted to increase the pressure of said working fluid in order to force it to pass through the holes of the die plate which are occupied by the mixture to be removed.

Further characteristics and advantages of the invention will become better apparent from the detailed description that follows of a preferred, but not exclusive, embodiment of the method according to the invention, as well as of a machine for its execution, which is illustrated for the purposes of non-limiting example in the accompanying drawings wherein:
Figure 1 schematically illustrates a machine for executing the method according to the invention, in an axially cross-sectional view at the start of the method;
Figure 2 schematically illustrates the machine of Figure 1 at the end of the method.

With reference to the figures, a machine for executing the method according to the invention, generally designated by the reference numeral 1, comprises a jacket 2 which defines, internally, a substantially cylindrical chamber 3.

In one of the walls that delimit the chamber 3, an opening 4 is defined that can be coupled with a die plate 5 to be cleaned so that one of the two end faces of the die plate 5 is connected to the inside of the chamber 3.

The machine according to the invention comprises means 6 of introducing a working fluid into the chamber 3 and means adapted to increase the pressure 7 of the working fluid so as to force it to pass through the holes 8 of the die plate 5 which are occupied by the mixture 9 to be removed.

Conveniently, the working fluid is constituted by a shear thickening fluid and that is to say by a non-Newtonian fluid the density of which increases as the speed of deformation increases.

This shear thickening fluid, in consideration of the fact that it is used in the food sector, is preferably constituted by a mixture of starch or potato starch and water.

In more detail, the chamber 3 is substantially cylindrical and the opening 4, which is intended to receive the die plate 5 to be subjected to cleaning, is defined at one of the two end faces of the chamber 3. At the opening 4 intended to receive the die plate 5, there are means 10 of retaining the die plate 5 so as to close the opening 4 in contrast with the action exerted by the working fluid.

The means 10 of retaining the die plate 5 comprise a ring 11 which is held in place by a clamping band 12.

The clamping band 12 engages with a flanging 13 defined at one axial end of the jacket 2 and with a flanging 14 of the ring 11 so as to adequately oppose the pressure exerted by the working fluid on the die plate 5.

Preferably, the chamber 3 is delimited, on the opposite side from the opening 4 intended to be occupied by the die plate 5, by a piston 15 which is arranged coaxially with the chamber 3.

Substantially, the piston 15 subdivides the inside of the jacket 2 into two chambers, respectively: the chamber 3, or first chamber, which is axially delimited by an end face of the jacket 2 in which the opening 4 intended to receive the die plate 5 is defined and by a face of the piston 15, and a second chamber 16 which is axially delimited by the opposite face of the piston 15 and by the opposite end face of the jacket 2.

The means adapted to increase the pressure 7 of the working fluid comprise means of pumping an actuation fluid under pressure into the second chamber 16.

Preferably these pumping means can be constituted simply by a conventional pump 17, for example a piston pump, a centrifugal pump, a gear pump or other type of pump.

The chamber 3 is connected to a duct 18 along which is arranged a valve 19 which can be opened in order to actuate the filling of the chamber 3 with the working fluid.

The machine is further provided with means 20 of moving the piston 15 away from the end face of the jacket 2 which is occupied by the die plate 5 at the end of the method, as will be better described hereinafter.

More specifically, the piston 15 is provided with a stem 21 which is connected to the face of the piston 15 which delimits the second chamber 16 and which exits from the opposite end face of the jacket 2 with respect to the end face intended to receive the die plate 5.

The movement means 20 of the piston 15 can be constituted, as illustrated, by two or more fluid-operated actuation cylinders 22 which are mounted with their body on the jacket 2 and which are oriented with their axis parallel to the axis 3a of the chamber 3. The fluid-operated actuation cylinders 22 are pivoted, with the end of the stem of their pistons, to a plate 23 which is fixed to the stem 21 of the piston 15.

For the sake of completeness of the description it should be noted that, between the die plate 5 subjected to cleaning and the side walls of the chamber 3, there is a sealing gasket 24, just as there are sealing gaskets 25 between the stem 21 of the piston 15 and the jacket 2. Alternatively, the seal between the die plate 5 and the jacket 2, instead of by way of a radial gasket as illustrated, can be provided by way of an axial gasket conveniently forming the part of the jacket 2 that mates with the die plate 5.

The jacket 2, or preferably the clamping band 12, can be supported by a trolley 26.

In the embodiment shown, the chamber 3 is arranged with its axis 3a vertical, which appears to be the rationally most correct arrangement, but it can be oriented differently according to requirements.

Operation of the machine described above in carrying out the method according to the invention is the following.

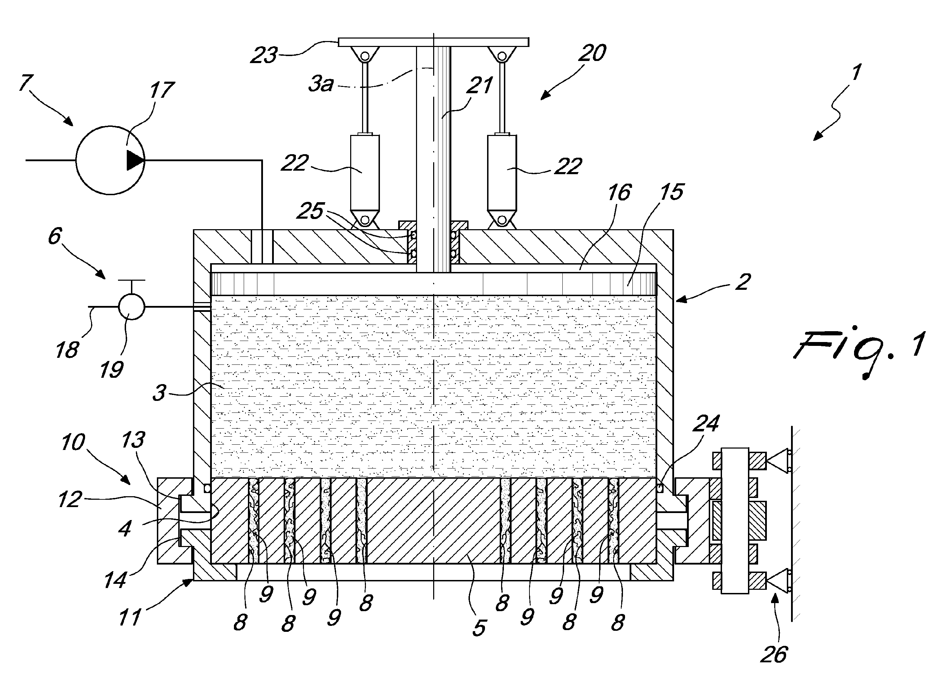

Initially, the piston 15 is raised completely, as illustrated in Figure 1, the chamber 3 is empty and the die plate 5 to be subjected to cleaning is coupled with the open lower end face of the chamber 3 and locked by way of the ring 11 and the clamping band 12.

With the die plate 5 to be subjected to cleaning thus positioned, the chamber 3 is filled with the working fluid by way of opening the valve 19. The air present inside the chamber 3 is progressively evacuated, for example through valves, which are conventional and not shown for the sake of simplicity.

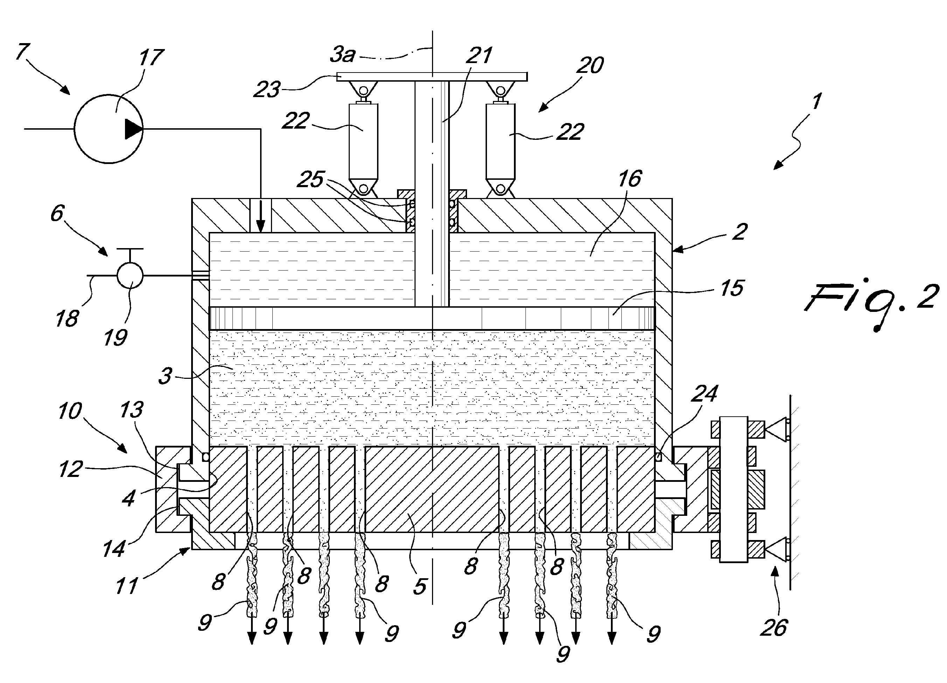

Once the chamber 3 has been filled with the working fluid, the pump 17 is actuated and introduces an actuation fluid under pressure, for example water, into the second chamber 16 thus causing the descent of the piston 15 and therefore increasing the pressure of the working fluid which progressively penetrates all the holes 8 of the die plate 5, propelling the mixture 9 contained in them outward until all the holes 8 of the die plate 5 are completely cleared, as illustrated in Figure 2.

It should be noted that, since the working fluid is constituted preferably by a shear thickening fluid, if one or more holes 8 of the die plate 5 should be cleared of the mixture 9 before the others, at these holes 8 the fluid would undergo a rapid deformation and therefore its viscosity would increase considerably, braking its dispersion outward and therefore maintaining a pressure of the working fluid inside the chamber 3 which is such as to ensure the expulsion of the mixture 9 through the holes 8 of the die plate 5 that are still occluded.

At the end of the expulsion of the mixture 9 from the holes 8 of the die plate 5, such holes 8 will be occupied by the working fluid which however is much less thick than the mixture 9 and therefore can be removed with great ease, for example with a jet of water.

After the removal of the die plate 5 from the machine, the piston 15, by way of actuation of the fluid-operated actuation cylinders 22, is lifted and returned to the initial position, while the actuation fluid is evacuated from the second chamber 16, for example by way of a reverse operation of the pump 17.

In the embodiment shown, the pressure of the working fluid in the chamber 3 is increased by way of the introduction of a fluid under pressure into the second chamber 16; however, the pressure of the working fluid in the chamber 3 could also be increased by mechanically actuating the piston 15, or the piston 15 could be absent and the pressure of the working fluid could be increased directly by introducing the working fluid into the chamber 3 by way of a press, for example a screw press.

It should be noted that the method according to the invention makes it possible to perform the cleaning of die plates using a reduced quantity of water and especially by avoiding an excessive washout of the mixture removed. Thanks to this fact, the method according to the invention makes it possible to considerably reduce the quantity of sticky discharge deriving from the operation to clean the die plates compared to the techniques used currently.

In practice it has been found that the method and the machine according to the invention fully achieve the set aim and objects in that, by reducing the quantity of sticky discharge deriving from the cleaning of die plates, it reduces the problems associated with its disposal, avoids the projection of fractions of the waste deriving from cleaning, and reduces the unpleasant-smelling emissions, thus improving the environmental conditions in the rooms used for washing die plates.

The method, as well as the machine for its execution, thus conceived, are susceptible of numerous modifications and variations, all of which are within the scope of the appended claims; moreover, all the details may be substituted by other, technically equivalent elements.

In practice, the materials employed, except where otherwise specified above, as well as the dimensions, may be any according to requirements and to the state of the art.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A method for cleaning die plates for the production of pasta or snacks, which is **characterized in that** it comprises the following steps:
- a first step, in which a working fluid is placed in contact with one of two end faces of a die plate (5) to be cleaned;
- a second step, in which the pressure of said working fluid is increased so as to force said working fluid to penetrate the holes (8) of the die plate (5) in order to push the residue of the mixture (9), present in said holes (8), so that it exits from the opposite end face of the die (5).

2. The method according to claim 1, **characterized in that** said working fluid is constituted by a shear thickening fluid (non-Newtonian fluid).

3. The method according to claim 2, **characterized in that** said shear thickening fluid is constituted by a mixture of starch and water.

4. The method according to one or more of the preceding claims, **characterized in that** said die plate (5) is arranged so as to close a chamber (3) into which said working fluid is introduced and pressurized.

5. The method according to one or more of the preceding claims, **characterized in that** said die plate (5) is arranged so as to close a chamber (3) into which said working fluid is introduced under pressure.

6. A machine for cleaning die plates for the production of pasta or snacks, **characterized in that** it comprises:
- a jacket (2) that internally defines a chamber (3);
- an opening (4) which is defined in one of the walls of said chamber (3) and can be coupled to a die plate (5) to be cleaned which can be arranged so that one of its end faces is connected to the inside of said chamber (3);
- means (6) for introducing a working fluid into said chamber (3);
- means adapted to increase the pressure (7) of said working fluid in order to force it to pass through the holes (8) of the die plate (5) which are occupied by the mixture (9) to be removed.

7. The machine according to claim 6, **characterized in that** said working fluid is constituted by a shear thickening fluid (non-Newtonian fluid).

8. The machine according to one or more of claims 6 and 7, **characterized in that** said chamber (3) is substantially cylindrical, said opening (4) being defined at one of the end faces of said jacket (2), there being means (10) of retaining the die plate (5) so as to close said opening (4) in contrast with the action of said working fluid.

9. The machine according to one or more of claims 6-8, **characterized in that** said chamber (3) is delimited, on the opposite side with respect to the opening (4) designed to be occupied by the die plate (5) to be cleaned, by a piston (15) which divides the inside of said jacket (2) into two chambers, respectively: said chamber (3) or first chamber and a second chamber (16) which is arranged on the opposite side from said first chamber (3) with respect to said piston (15), said piston (15) being arranged coaxially to said chambers (3, 16).

10. The machine according to one or more of claims 6-9, **characterized in that** said means adapted to increase the pressure (7) of said working fluid comprise means (17) for pumping an actuation fluid under pressure into said second chamber (16).

11. The machine according to one or more of claims 6-10, **characterized in that** it comprises means for moving said piston (15) away from the end face of said chamber (3) designed to be occupied by the die plate (5).
